# EUROPEAN PATENT SPECIFICATION

(11) **EP 3 109 959 B1**
(45) Date of publication and mention of the grant of the patent: **27.02.2019**
(21) Application number: 14883308.0
(22) Date of filing: 26.05.2014
(51) Int. Cl.: H02G 1/02, H02G 1/04

(54) **REVERSE-RETREAT PREVENTING APPARATUS**
VORRICHTUNG ZUR VERHINDERUNG VON GEGENLÄUFIGEM RÜCKGANG
APPAREIL DE PRÉVENTION DE RECUL INVERSE

(30) Priority: 20.02.2014 CN 201410057446; 20.02.2014 CN 201420072865 U
(43) Date of publication of application: 28.12.2016
(73) Proprietor: State Grid Corporation of China (SGCC), Beijing 100031 (CN); State Grid Hebei Electric Power Company, Shijiazhuang, Hebei 050021 (CN); State Grid Hebei Electric Power Company Hengshui Power Supply Branch, Hengshui, Hebei 053000 (CN)
(72) Inventor: YIN, Zhirui, Hengshui City, Hebei 053000 (CN); GAO, Bing, Hengshui City, Hebei 053000 (CN); WANG, Zhengping, Hengshui City, Hebei 053000 (CN); AN, Shihua, Hengshui City, Hebei 053000 (CN); WANG, Yinzhong, Hengshui City, Hebei 053000 (CN); WU, Xiaoguang, Hengshui City, Hebei 053000 (CN); LIU, Wei, Hengshui City, Hebei 053000 (CN)
(74) Representative: Global IP Europe Patentanwaltskanzlei
(86) International application number: PCT/CN2014/078384
(87) International publication number: WO 2015/123929

(56) References cited:
- EP-A1- 1 231 098
- CN-A- 102 709 849
- CN-U- 202 004 379
- CN-U- 202 084 851
- JP-A- H09 227 078
- JP-A- 2007 288 837
- JP-A- 2010 220 453
- US-A- 5 388 781
- US-A1- 2008 246 010

## Description

### BACKGROUND

### Field of the Application

The present invention relates to a technical field of controlling movement direction of a rope, and specifically to a retreat preventing apparatus.

### Background of the Application

A winch is one of the most common mechanical equipments during construction of a power transmission line, which mainly is used in traction work and widely is applied in each process of line construction, such as tower group erection, putting-stringing line and opgw (Optical Fiber Composite Overhead Ground Wire) cable erection.

Accidents caused by the winch during site construction basically are retreat of which the meaning is that a traction rope wrapped around the winch rapidly goes back in the opposite direction because of some uncontrollable reason during normal traction using the winch. If the retreat phenomenon occurs, the winch will be ineffective, and the traction rope will quickly go back and drive a reel to quickly move toward the winch direction. If the on-site operators do not get out of the way in time, the on-site operators will be harmed and even die.

The reason of retreat is explored and roughly includes the following contents:
1. Since the traction rope is intertwined during normal traction, the retreat occurs when prizing the winch traction rope.
2. Since the operators pulling a tail rope pull in a wrong direction, the tail rope falls off outside the winch to cause the retreat.
3. Since cooperation is no understanding or the number of people pulling the tail rope is fewer, the retreat occurs when changing the operators pulling the tail rope.
4. When the broken traction rope is not discovered timely and breaks off through the winch, the retreat will also occur.

It can be seen from the above that there are many reasons for the retreat, and that there is a great harm after causing the retreat. Given this, it is necessary for this industry to develop a retreat preventing apparatus, so as to avoid the retreat. Relevant patent literature in regard to the present invention:

US 2008246010 A1: Methods and equipment allowing for an old transmission line conductor to serve as a lead cable to draw a new conductor into its place.

US 5388781 A: A method and an apparatus for pulling cables: the apparatus including a cooperatively driven pulling line take up spool, a level winding device and a capstan, optionally driven jointly by the same drive.

EP 1231098 A1: A device for detecting the tension for stretching machines comprising means to teed a cable to be stretched and a breaking/traction device.

### SUMMARY

### Application Object

An object of the present invention is to provide a retreat preventing apparatus (sometimes named as a reverse-retreat preventing apparatus), so as to solve the problem of the retreat capable of being caused during the application of the winch.

### Technical Solution

In order to solve the aforementioned problem, the present invention provides a retreat preventing apparatus which has the following technical solution.

A retreat preventing apparatus, comprises: a base for providing support, a detecting assembly provided on the base for detecting the movement direction of a winch traction rope, and a braking assembly provided on the base and connected to the detecting assembly; wherein the detecting assembly triggers the braking assembly when the movement of the winch traction rope in an opposite direction is detected by the detecting assembly, so as to make the braking assembly clamp the winch traction rope.

Preferably, in the aforementioned retreat preventing apparatus, the base is plate-shaped, and a pulling ring is fixed at a front end of the base.

In the aforementioned retreat preventing apparatus, the detecting assembly comprises: a pulley mechanism comprising at least one pulley of which a groove is used to limit the winch traction rope to detect the movement direction of the winch traction rope; and a transmission mechanism connected to a rotary shaft of the pulley and the braking assembly for triggering the braking assembly at the time of the change of the movement direction of the winch traction rope detected by the pulley mechanism.

In the aforementioned retreat preventing apparatus, the pulley mechanism comprises a first pulley, a second pulley and a third pulley of which the axes are parallel, the first pulley and the third pulley are provided on both sides of the second pulley, and the height of the second pulley is different from those of the first pulley and the third pulley, so as to closely embed the winch traction rope into the grooves of the first pulley, the second pulley and the third pulley; and the rotary shaft of the second pulley is connected to the transmission mechanism.

Preferably, in the aforementioned retreat preventing apparatus, the transmission mechanism comprises: a ratchet-pawl mechanism provided on one end of the rotary shaft of the pulley, of which the pawl is used to drive the ratchet of the ratchet-pawl mechanism to turn at the time of the movement of a winch traction rope in the opposite direction; an outer wheel fixed on the outside of the ratchet of the ratchet-pawl mechanism; and a link mechanism connected to the outer wheel for transmitting the rotation of the outer wheel to the braking assembly, so as to trigger the braking assembly.

Preferably, in the aforementioned retreat preventing apparatus, the link mechanism comprises: a first link of which a first end is connected to the outer wheel; a second link of which a first end is hinged to a second end of the first link and of which a second end is hinged to the base; and a third link of which a middle portion is hinged to the base and of which a first end is provided below the first end of the second link, the outer wheel drives the second link to incline toward the first end of the third link when rotating and to downward press the third link to upward bend the second end of the third link, thereby triggering the braking assembly.

Preferably, in the aforementioned retreat preventing apparatus, the link mechanism further comprises: a fourth link, of which a first end is upward bent to form an L shape and of which a second end is connected to the braking assembly; the second end of the third link is downward bent to form an L shape and engages with the first end of the fourth link; the second end of the third link disengages with the first end of the fourth link when the second end of the third link is upward bent, thereby triggering the braking assembly.

Preferably, in the aforementioned retreat preventing apparatus, the braking assembly comprises: a wire clamp device fixed on the base, including a clamping groove which is in the same plane with the groove of the pulley and a pulling handle connected to the second end of the fourth link; and a limit groove corresponding to the clamping groove, for limiting the winch traction rope.

Preferably, in the aforementioned retreat preventing apparatus, the limit groove is a groove of a limit pulley, the rotation shaft of the limit pulley is provided on a first ear plate and a second ear plate, the first ear plate reversibly is hinged on the base relative to the second ear plate, the second ear plate is fixed on the base.

Preferably, in the aforementioned retreat preventing apparatus, both the first pulley and the third pulley include a height-adjusting mechanism for adjusting heights of the first pulley and the third pulley, thereby more closely contacting the winch traction rope with the second pulley.

### Beneficial effects

It can be known by analysis that the apparatus of the present invention can automatically detect the movement direction of the winch traction rope and can timely clamp the traction rope at the time of the movement of the traction rope in the opposite direction, thereby preventing generation of the retreat phenomenon and avoiding various accidents caused by the retreat.

### BRIEF DESCRIPTION OF THE DRAWINGS

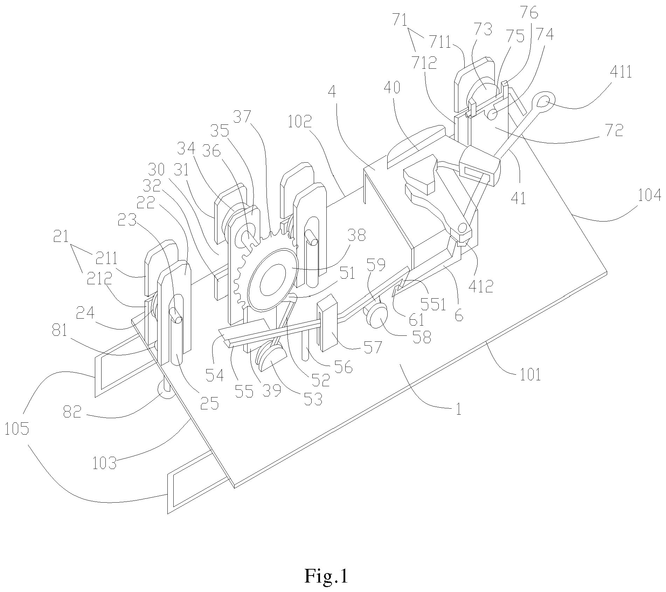

Fig.1 is a three-dimensional structure view of a preferred embodiment of the present invention.

### DETAILED DESCRIPTION OF THE EMBODIMENTS

In combination with the drawings and the embodiments, the present invention will be further explained in detail below.

As shown in Fig.1, the apparatus of the preferred embodiment mainly comprises a base 1, a detecting assembly provided on a first half portion 103 of the base 1, and a braking assembly provided on a second half portion 104 of the base 1. It needs to be explained in advance that the terms for representing direction such as the first half portion 103, the second half portion 104, the front view side 101 and the rear view side 102 of the base 1 as described below, and the like are used in order to be convenient to describe, and that the terms should not be understood as any limit for shape, structure and position of the base 1 and for shape, structure and position of the detecting assembly and the braking assembly provided on the base 1.

Specifically, the base 1 mainly is used to support the detecting assembly and the braking assembly. Preferably, the base 1 is plate-shaped, and a pull-tab 105 mainly used to connect a fixture is fixed to a front end of the base 1.

The detecting assembly for detecting the movement direction of a winch traction rope is provided on the first half portion 103 of the base 1; the detecting assembly perceives the change of the direction and transmits the change to the braking assembly when the traction rope moves in the opposition direction (namely when the traction rope is far away from the winch).

The braking assembly is provided on the second half portion 104 of the base 1 and connects the detecting assembly; the detecting assembly triggers the braking assembly when the movement of the winch traction rope (sometimes named as the winching mill traction rope) in an opposite direction is detected by the detecting assembly, so as to make the braking assembly clamp the winch traction rope.

As shown in Fig.1, preferably, the detecting assembly mainly comprises a pulley mechanism for detecting the movement direction of the winch traction rope and a transmission mechanism for transmitting the signal of the movement direction change of the traction rope to the braking assembly. The pulley mechanism is coupled to the transmission mechanism. Wherein, the pulley mechanism comprises: three pulleys respectively being a first pulley 24, a second pulley 34 and an unlabeled third pulley having the same structure with the first pulley 24, and corresponding support housings. The grooves of the three pulleys are used to limit the winch traction rope, wherein the second pulley 34 is used to detect the change of the movement direction of the traction rope and transmits the change to the transmission mechanism by a rotary shaft 36 thereof, so that the transmission mechanism triggers the braking assembly when the change of the movement direction of the winch traction rope is detected by the second pulley 34, thereby clamping the traction rope to prevent the retreat phenomenon from generating.

More specifically, the axes of the first pulley 24, the second pulley 34 and the third pulley in the pulley mechanism are parallel, the first pulley 24 is provided on one side of the second pulley 34 and the third pulley is provided on the other side of the second pulley 34. The height of the second pulley is different from those of the first pulley 24 and the third pulley 34, for example, the heights of the first pulley 24 and the third pulley are lower than that of the second pulley 34, so that the traction rope passes the upper groove of the first pulley 24, the lower groove of the second pulley 34 and the upper groove of the third pulley, that is to say, the traction rope passes the grooves of the three pulleys in the state of slight bend, so as to be capable to closely embed the winch traction rope into the grooves of the first pulley 24, the second pulley 34 and the third pulley, thereby more closely contacting the traction rope with the second pulley 34, this can make the second pulley 34 perceive the change of the direction of the traction rope more timely and accurately.

More preferably, the first pulley 24 is provided between two ear plates 21 and 22, the ear plate 22 on the front view side 101 of the base 1 has an integral structure, the ear plate 21 on the rear view side 102 of the base 1 has a structure with two section including an upper ear plate 211 and a lower ear plate 212, a lower end of the upper ear plate 211 is hinged to the upper end of the lower ear plate 212, that is to say, the upper ear plate 211 can flip toward the rear view side 102. Since the third pulley has the same structure with the first pulley 24, the structure of the third pulley is not repeated herein. The second pulley 34 is provided between two ear plates 31 and 35, a gap 30 capable to pass the traction rope is below the ear plate 31, and a vertical plate 32 is below the gap 30. In on-site operation, the upper ear plate 211 is flipped toward the rear view side 102, so as to embed the traction rope into the grooves of the three pulleys through the upper ear plate 211 and the gap 30. This shows that the turnover design for the upper ear plate 211 and the suspending design for the ear plate 31 are easy to embed the traction rope into the grooves of the three pulleys in site. More preferably, the preferred embodiment also includes a reinforcing plate in order to enhance strength of the ear plates for supporting the three pulleys and avoid the disengagement of the traction rope, the reinforcing plate is tightly fixed on the ear plate 31 and the vertical plate 32 by bolts and meanwhile also is extended and covered on the upper ear plate 211 and the lower ear plate 212 after embedding the traction rope into the grooves of the pulleys.

More preferably, both the first pulley 24 and the third pulley of the preferred embodiment include a height-adjusting mechanism for adjusting heights of the first pulley 23 and the third pulley, thereby more closely contacting the winch traction rope with the second pulley. And specifically, a vertical stud bolt 82 and a driving plate without illustration are provided below the base 1, a thread block 81 on which a thread hole is provided is provided on the base 1, the top end of the stud bolt 82 passes through the base 1 and is screwed into the thread hole and meanwhile the driving plate connects the stud bolt 82 by thread. The two ends of the rotary shaft 23 of the first pulley 24 can movably up and down pass through the ear plates 21 and 22 and then respectively are provided at the top end of a stand column 25, the lower end of the stand column 25 passes through the base 1 and is fixed on the driving plate. When the stud bolt 82 is rotated, the stud bolt 82 drives the driving plate to move up and down, and the driving plate drives the stand column 25 to slide up and down, thereby driving the rotary shaft 23 and the first pulley 24 to move up and down. The height adjustment of the first pulley 24 is easy to embed the traction rope into the groove thereof, and meanwhile is easy to adjust frictional force between the traction rope and the three pulleys.

As shown in Fig.1 once more, the transmission mechanism comprises an outer wheel 37, a ratchet-pawl mechanism 38 and a link mechanism. The ratchet-pawl mechanism 38 is provided at one end of the rotary shaft 36 of the second pulley 34 passing through the ear plate 35, and a vertical plate 39 is supported at the end of the rotary shaft 36. The pawl of the ratchet-pawl mechanism 38 drives the ratchet of the ratchet-pawl mechanism 38 to turn when the winch traction rope moves in the opposite direction. The outer wheel 37 is fixed on the outside of the ratchet of the ratchet-pawl mechanism 38.

The outer wheel 37 and the ratchet-pawl mechanism 38 have the same structure with a bicycle free wheel (namely, overrunning clutch). In order to save cost, the embodiment shown in Fig.1 directly employs a bicycle free wheel. The bicycle free wheel stays still during normal traction, once the traction rope moves in the opposite direction, the bicycle free wheel will be driven to turn.

The link mechanism is connected to the outer wheel 37 and is used to transmit the rotation of the outer wheel 37 to the braking assembly, so as to trigger the braking assembly. Preferably, the link mechanism comprises a first link 51, a second link 52, a third link 55 and a fourth link 6. A first end of the first link 51 is connected to the outer wheel 37. A first end of the second link 52 is hinged to a second end of the first link 51 and a second end thereof is hinged to a support mount 53 on the base 1. A middle portion of the third link 55 is hinged to a support mount 58 on the base 1 through a hinging plate 59, a horizontal plate 54 which is provided below the first end of the second link 52 is provided to extend toward the lower side of the outer wheel 37 from a first end of the third link 55. The outer wheel 37 drives the second link 52 to incline toward the first end of the third link 55 when rotating and to downward press the third link 55, so as to upward bend the second end of the third link 55, thereby triggering the braking assembly. A first end of the fourth link 6 is upward bent to form an L shape and a second end thereof is connected to a wire clamp device 4 of the braking assembly. The second end 551 of the third link 55 is downward bent to form an L shape and engages with the first end 61 of the fourth link 6. The second end 551 of the third link 55 disengages from the first end 61 of the fourth link 6 when the second end of the third link 55 is upward bent, thereby triggering the wire clamp device 4 of the braking assembly.

In order to prevent the third link 55 from generating unnecessary swing, the preferred embodiment also includes a limit frame 57 having a door-shaped structure, and the third link 55 passes through the limit frame 57. In addition, in order to be capable to return the third link 55 to in-situ timely and more closely engage the second end 551 of the third link 55 with the first end 61 of the fourth link 6, a vertical compression spring 56 is provided below the first end of the third link 55 and is fixed between the third link 55 and the base 1.

As shown in Fig.1 once more, the braking assembly comprises a wire clamp device 4 fixed on the base 1 and a limit pulley 73. The wire clamp device 4 includes a clamping groove 40 and a pulling handle 41. Since the wire clamp device 4 belongs to the art, the structure thereof only is schematically shown in Fig.1 and is not repeated herein. The clamping groove 40 is in the same plane with the grooves of the above-mentioned three pulleys, the front end 412 of the pulling handle 41 connects the second end of the fourth link 6, and the rear end 411 thereof is a pulling handle ring. The groove of the limit pulley 73 as a limit groove of the traction rope corresponds to the clamping groove 40 and is used to limit the winch traction rope, thereby preventing the traction rope from swinging.

More preferably, the rotary shaft 74 of the limit pulley 73 is provided on ear plates 71 and 72, the ear plate 71 reversibly is hinged on the base 1 relative to the ear plate 72, the second ear plate 72 is fixed on the base 1, namely similar to a support housing of the first pulley 24; the ear plate 71 includes an upper ear plate 711 and a lower ear plate 712, the upper ear plate 711 is capable to flip toward the rear view side 102 of the base 1, so as to be easy to embed the traction rope into the clamping groove 40 and the groove of the limit pulley 73. Further, the upper end of the ear plate 72 is a bolt 75 and two nuts 76, the end portion of the rotary shaft 74 is located on the lower side of the bolt 75. The bolt 75 is rotated when flipping the upper ear plate 711, which is easy to disengage the rotary shaft 74 from the ear plate 72. The upper ear plate 711 is erected after the traction rope is placed into the clamping groove 40 and between the ear plate 71 and the ear plate 72, the traction rope is embedded into the groove of the limit pulley 73, and then the bolt 75 is screwed into the two nuts 76, so as to make the bolt 75 tightly press on the rotary shaft 74.

During the application of the preferred embodiment, the pulling handle ring of the wire clamp device 4 can connect a tractor installed with the winch, the pulling handle ring 105 connects a fixture like a ground anchor through a hawser and the like. Normal operation can be preformed after the traction rope is embedded into the grooves of the first pulley 24, the second pulley 34, the third pulley and the limit pulley, and the clamping groove 40 according to the abovementioned description. When the traction rope moves in the opposite direction, that is to say, when there is a trend of disengaging from the winch, the second pulley 34 rotates in the opposite direction immediately and drives the outer wheel 37 to turn, the second end of the third link 55 upward bends and disengages with the first end of the fourth link 6, the traction rope is clamped into the clamping groove 40 by the pulling handle 41 immediately. Since the tractor installed with the winch has enough weight and power, the further movement of the traction rope can be avoided.

In conclusion, the present invention can prevent the retreat phenomenon from generating in the simple and easy means, thereby greatly improve safety of power operation site. And meanwhile the present invention is simple in structure, low in cost and easy to widely be spread. Certainly, the present invention not only applies to the winch traction rope, but also any situation in which the movement of the rope in single direction is required and meanwhile the movement of the rope in the opposite direction is avoided. All of changes in the range of the present invention or in the range equal to the present invention are contained by the present invention.

## Claims

1. A retreat preventing apparatus, comprising:
a base (1), for providing support;
a detecting assembly, provided on the base (1), for detecting the movement direction of a winch traction rope; and
a braking assembly, provided on the base (1) and connected to the detecting assembly; wherein the detecting assembly triggers the braking assembly when the movement of the winch traction rope in an opposite direction is detected by the detecting assembly, so as to make the braking assembly clamp the winch traction rope;
**characterized in that** the detecting assembly comprises
a pulley mechanism, comprising at least one pulley of which a groove is used to limit the winch traction rope to detect the movement direction of the winch traction rope and a transmission mechanism connected to a rotary shaft of the pulley and the braking assembly, for triggering the braking assembly at the time of the change of the movement direction of the winch traction rope detected by the pulley mechanism, wherein
the pulley mechanism comprises a first pulley (24), a second pulley (34) and a third pulley of which the axes are parallel, the first pulley (24) and the third pulley are provided on both sides of the second pulley (34), and the height of the second pulley (34) is different from those of the first pulley (24) and the third pulley, so as to closely embed the winch traction rope into the grooves of the first pulley (24), the second pulley (34) and the third pulley and the rotary shaft (36) of the second pulley (34) is connected to the transmission mechanism.

2. The retreat preventing apparatus according to claim 1, wherein the base (1) is plate-shaped, and a pulling ring (105) is fixed at a front end of the base (1).

3. The retreat preventing apparatus according to claim 1, wherein the transmission mechanism comprises:
a ratchet-pawl mechanism (38) provided on one end of the rotary shaft (36) of the pulley (34), of which the pawl is used to drive the ratchet of the ratchet-pawl mechanism to turn at the time of the movement of a winch traction rope in the opposite direction;
an outer wheel (37) fixed on the outside of the ratchet of the ratchet-pawl mechanism (38); and
a link mechanism connected to the outer wheel (37) for transmitting the rotation of the outer wheel (37) to the braking assembly, so as to trigger the braking assembly.

4. The retreat preventing apparatus according to claim 3, wherein the link mechanism comprises:
a first link (51) of which a first end is connected to the outer wheel (37);
a second link (52) of which a first end is hinged to a second end of the first link (51) and of which a second end is hinged to the base (1); and
a third link (55) of which a middle portion is hinged to the base (1) and of which a first end is provided below the first end of the second link (52), the outer wheel (37) drives the second link (52) to incline toward the first end of the third link (55) when rotating and to downward press the third link (55) to upward bend the second end (551) of the third link (55), thereby triggering the braking assembly.

5. The retreat preventing apparatus according to claim 4, wherein the link mechanism further comprises:
a fourth link (6), of which a first end is upward bent to form an L shape and of which a second end is connected to the braking assembly;
the second end (551) of the third link (55) is downward bent to form an L shape and engages with the first end of the fourth link (6); the second end (551) of the third link (55) disengages with the first end of the fourth link (6) when the second end (551) of the third link (55) is upward bent, thereby triggering the braking assembly.

6. The retreat preventing apparatus according to claim 5, wherein the braking assembly comprises:
a wire clamp device (4) fixed on the base (1), including a clamping groove (40) which is in the same plane with the groove of the pulley and a pulling handle (41) connected to the second end of the fourth link (6); and
a limit groove corresponding to the clamping groove (40), for limiting the winch traction rope.

7. The retreat preventing apparatus according to claim 6, wherein the limit groove is a groove of a limit pulley (73), the rotation shaft (74) of the limit pulley (73) is provided on a first ear plate (71) and a second ear plate (72), the first ear plate (71) reversibly is hinged on the base (1) relative to the second ear plate (72), the second ear plate (72) is fixed on the base (1).

8. The retreat preventing apparatus according to claim 1, wherein both the first pulley (24) and the third pulley include a height-adjusting mechanism for adjusting heights of the first pulley (24) and the third pulley, thereby more closely contacting the winch traction rope with the second pulley (34).

## Patentansprüche

1. Vorrichtung zur Rücklaufverhinderung, mit:
einer Basis (1) zum Bereitstellen eine Halterung;
einer an der Basis (1) vorgesehenen Erfassungsanordnung zum Erfassen der Bewegungsrichtung eines Windenzugseils; und
einer Bremsanordnung, die an der Basis (1) vorgesehen und mit der Erfassungsanordnung verbunden ist; wobei die Erfassungsanordnung die Bremsanordnung auslöst, wenn durch die Erfassungsanordnung die Bewegung des Windenzugseils in eine Gegenrichtung erfasst wird, um die Bremsanordnung zu veranlassen, das Windenzugseil festzuklemmen;
**dadurch gekennzeichnet, dass** die Erfassungsanordnung aufweist:
einen Seilscheibenmechanismus, der mindestens eine Seilscheibe, von der eine Rille verwendet wird, um das Windenzugseil zu begrenzen, um die Bewegungsrichtung des Windenzugseils zu erfassen, und einen Getriebemechanismus aufweist, der mit einer Drehwelle der Seilscheibe und der Bremsanordnung zum Auslösen der Bremsanordnung zur Zeit der durch den Seilscheibenmechanismus erfassten Änderung der Bewegungsrichtung des Windenzugseils verbunden ist, wobei der Seilscheibenmechanismus eine erste Seilscheibe (24), eine zweite Seilscheibe (34) und eine dritte Seilscheibe aufweist, deren Achsen parallel sind, die erste Seilscheibe (24) und die dritte Seilscheibe auf beiden Seiten der zweiten Seilscheibe (34) vorgesehen sind, und sich die Höhe der zweiten Seilscheibe (34) von der der ersten Seilscheibe (24) und der dritten Seilscheibe unterscheidet, so dass das Windenzugseil eng in die Rillen der ersten Seilscheibe (24), der zweiten Seilscheibe (34) und der dritten Seilscheibe eingebettet ist, und die Drehwelle (36) der zweiten Seilscheibe (34) mit dem Getriebemechanismus verbunden ist.

2. Vorrichtung zur Rücklaufverhinderung nach Anspruch 1, wobei die Basis (1) plattenförmig ist und ein Zugring (105) an einem vorderen Ende der Basis (1) befestigt ist.

3. Vorrichtung zur Rücklaufverhinderung nach Anspruch 1, wobei der Getriebemechanismus aufweist:
einen Sperrklinkenmechanismus (38), der an einem Ende der Drehwelle (36) der Seilscheibe (34) vorgesehen ist, von dem die Sperrklinke verwendet wird, um das Klinkenrad des Sperrklinkenmechanismus anzutreiben, um sich zur Zeit der Bewegung eines Windenzugseils in die Gegenrichtung zu drehen;
ein äußeres Rad (37), das an der Außenseite des Klinkenrads des Sperrklinkenmechanismus (38) befestigt ist; und
einen Verbindungsmechanismus, der mit dem äußeren Rad (37) zum Übertragen der Drehung des äußeren Rads (37) auf die Bremsanordnung verbunden ist, um die Bremsanordnung auszulösen.

4. Vorrichtung zur Rücklaufverhinderung nach Anspruch 3, wobei der Verbindungsmechanismus aufweist:
ein erstes Verbindungselement (51), von dem ein erstes Ende mit dem äußeren Rad (37) verbunden ist;
ein zweites Verbindungselement (52), von dem ein erstes Ende mit einem zweiten Ende des ersten Verbindungselements (51) gelenkig verbunden ist und von dem ein zweites Ende mit der Basis (1) gelenkig verbunden ist; und
ein drittes Verbindungselement (55), von dem ein Mittelabschnitt mit der Basis (1) gelenkig verbunden ist und von dem ein erstes Ende unter dem ersten Ende des zweiten Verbindungselements (52) vorgesehen ist, wobei das äußere Rad (37) das zweite Verbindungselement (52) antreibt, sich zum ersten Ende des dritten Verbindungselements (55) zu neigen, wenn es sich dreht, und um das dritte Verbindungselement (55) nach unten zu drücken, um das zweite Ende (551) des dritten Verbindungselement (55) nach oben zu biegen, wodurch die Bremsanordnung ausgelöst wird.

5. Vorrichtung zur Rücklaufverhinderung nach Anspruch 4, wobei der Verbindungsmechanismus ferner aufweist:
ein viertes Verbindungselement (6), von dem ein erstes Ende nach oben gebogen ist, so dass es eine L-Form bildet und von dem ein zweites Ende mit der Bremsanordnung verbunden ist;
das zweite Ende (551) des dritten Verbindungselements (55) nach unten gebogen ist, so dass es eine L-Form bildet und mit dem ersten Ende des vierten Verbindungselements (6) in Eingriff tritt; wobei sich das zweite Ende (551) des dritten Verbindungselements (55) vom ersten Ende des vierten Verbindungselements (6) löst, wenn das zweite Ende (551) des dritten Verbindungselements (55) nach oben gebogen wird, wodurch die Bremsanordnung ausgelöst wird.

6. Vorrichtung zur Rücklaufverhinderung nach Anspruch 5, wobei die Bremsanordnung aufweist:
eine Seilklemmvorrichtung (4), die an der Basis (1) befestigt ist, die eine Klemmrille (40), die sich in derselben Ebene mit der Rille der Seilscheibe befindet, und einen Zuggriff (41) aufweist, der mit dem zweiten Ende des vierten Verbindungselements (6) verbunden ist; und
eine Begrenzungsrille, die der Klemmrille (40) entspricht, zum Begrenzen des Windenzugseils.

7. Vorrichtung zur Rücklaufverhinderung nach Anspruch 6, wobei die Begrenzungsrille eine Rille einer Begrenzungsseilscheibe (73) ist, die Drehwelle (74) der Begrenzungsseilscheibe (73) an einer erste Ösenplatte (71) und einer zweite Ösenplatte (72) vorgesehen ist, wobei die erste Ösenplatte (71) relativ zur zweiten Ösenplatte (72) reversibel an der Basis (1) angelenkt ist und die zweite Ösenplatte (72) an der Basis (1) befestigt ist.

8. Vorrichtung zur Rücklaufverhinderung nach Anspruch 1, wobei sowohl die erste Seilscheibe (24) als auch die dritte Seilscheibe einen Höheneinstellmechanismus zum Einstellen der Höhe der ersten Seilscheibe (24) und der dritten Seilscheibe aufweist, wodurch das Windenzugseil in engeren Kontakt mit der zweiten Seilscheibe (34) gebracht wird.

## Revendications

1. Dispositif de prévention de recul, comprenant :
une base (1) assurant un support ;
un ensemble de détection disposé sur la base (1) pour détecter le sens de déplacement d'une corde de traction de treuil ; et
un ensemble de freinage disposé sur la base (1) et raccordé à l'ensemble de détection ; où l'ensemble de détection actionne l'ensemble de freinage quand un déplacement de la corde de traction de treuil dans un sens opposé est détecté par l'ensemble de détection, de manière à faire serrer la corde de traction de treuil par l'ensemble de freinage ;
**caractérisé en ce que** l'ensemble de détection comprend un mécanisme à poulie comportant au moins une poulie dont une rainure est utilisée pour retenir la corde de traction de treuil afin de détecter le sens de déplacement de la corde de traction de treuil, et un mécanisme de transmission raccordé à un arbre rotatif de la poulie et à l'ensemble de freinage pour actionner l'ensemble de freinage au moment de l'inversion du sens de déplacement de la corde de traction de treuil détectée par le mécanisme à poulie, où le mécanisme à poulie comprend une première poulie (24),
une deuxième poulie (34) et une troisième poulie dont les axes sont parallèles, la première poulie (24) et la troisième poulie étant disposées de part et d'autre de la deuxième poulie (34), et la hauteur de la deuxième poulie (34) différant de celle de la première poulie (24) et de la troisième poulie, de manière à serrer étroitement la corde de traction de treuil dans les rainures de la première poulie (24), de la deuxième poulie (34) et de la troisième poulie, et l'arbre rotatif (36) de la deuxième poulie (34) étant raccordé au mécanisme de transmission.

2. Dispositif de prévention de recul selon la revendication 1, où la base (1) est en forme de plaque, et où un anneau de traction (105) est fixé à une extrémité avant de la base (1) .

3. Dispositif de prévention de recul selon la revendication 1, où le mécanisme de transmission comprend :
un mécanisme à cliquet (38) disposé à une extrémité de l'arbre rotatif (36) de la poulie (34), dont le cliquet est utilisé pour entraîner la rotation du rochet dudit mécanisme à cliquet au moment de l'inversion du sens de déplacement de la corde de traction de treuil ;
une roue extérieure (37) fixée à l'extérieur du rochet du mécanisme à cliquet (38) ; et
un mécanisme à bielle raccordé à la roue extérieure (37) pour transmettre la rotation de la roue extérieure (37) à l'ensemble de freinage, de manière à actionner l'ensemble de freinage.

4. Dispositif de prévention de recul selon la revendication 3, où le mécanisme à bielle comprend :
une première bielle (51) dont une première extrémité est raccordée à la roue extérieure (37) ;
une deuxième bielle (52) dont une première extrémité est articulée à une deuxième extrémité de la première bielle (51) et dont une deuxième extrémité est articulée à la base (1) ; et
une troisième bielle (55) dont une partie centrale est articulée à la base (1) et dont une première extrémité est disposée en dessous de la première extrémité de la deuxième bielle (52), la roue extérieure (37) entraînant par rotation l'inclinaison de la deuxième bielle (52) vers la première extrémité de la troisième bielle (55) et le rabattement vers le bas de la troisième bielle (55) pour remonter la deuxième extrémité (551) de la troisième bielle (55), en actionnant ainsi l'ensemble de freinage.

5. Dispositif de prévention de recul selon la revendication 4, où le mécanisme à bielle comprend en outre :
une quatrième bielle (6) dont une première extrémité est coudée vers le haut pour former un L et dont une deuxième extrémité est raccordée à l'ensemble de freinage ;
la deuxième extrémité (551) de la troisième bielle (55) étant coudée vers le bas pour former un L et étant en prise avec la première extrémité de la quatrième bielle (6) ; la deuxième extrémité (551) de la troisième bielle (55) se dégageant de la première extrémité de la quatrième bielle (6) quand la deuxième extrémité (551) de la troisième bielle (55) est remontée, en actionnant ainsi l'ensemble de freinage.

6. Dispositif de prévention de recul selon la revendication 5, où l'ensemble de freinage comprend :
un dispositif de serrage de câble (4) fixé sur la base (1), comprenant une rainure de serrage (40) située sur le même plan que la rainure de la poulie et une poignée de traction (41) raccordée à la deuxième extrémité de la quatrième bielle (6) ; et
une rainure de retenue correspondant à la rainure de serrage (40) pour retenir la corde de traction de treuil.

7. Dispositif de prévention de recul selon la revendication 6, où la rainure de retenue est une rainure d'une poulie de retenue (73), l'arbre rotatif (74) de la poulie de retenue (73) étant monté sur une première plaque à oreilles (71) et une deuxième plaque à oreilles (72), la première plaque à oreilles (71) étant articulée de manière réversible sur la base (1) par rapport à la deuxième plaque à oreilles (72), la deuxième plaque à oreilles (72) étant fixée sur la base (1) .

8. Dispositif de prévention de recul selon la revendication 1, où la première poulie (24) et la troisième poulie comprennent un mécanisme de réglage de hauteur pour ajuster les hauteurs de la première poulie (24) et de la troisième poulie, en serrant plus étroitement la corde de traction de treuil contre la deuxième poulie (34).
